**Europäisches Patentamt**

**European Patent Office**

**Office européen des brevets**

(11) Publication number : **0 464 964 B1**

# EUROPEAN PATENT SPECIFICATION

(45) Date of publication of patent specification :
**02.08.95 Bulletin 95/31**

(21) Application number : **91202448.6**

(22) Date of filing : **25.09.87**

(51) Int. Cl.⁶ : **G01L 3/10**

## (54) Torque detecting devices.

(30) Priority : **26.09.86 JP 226062/86**
**27.12.86 JP 310685/86**

(43) Date of publication of application :
**08.01.92 Bulletin 92/02**

(60) Publication number of the earlier application in accordance with Art. 76 EPC : **0 261 980**

(45) Publication of the grant of the patent :
**02.08.95 Bulletin 95/31**

(84) Designated Contracting States :
**DE FR GB**

(56) References cited :
**DE-A- 2 410 047**
**US-A- 4 033 791**
**SOVIET INVENTIONS ILLUSTRATED, Derwent Publications Ltd., Section C, week 8701, abstract no. 006223,U11; & SU-A-1232693**
**PATENT ABSTRACTS OF JAPAN vol. 5, no. 49 (C-49)(721), 8 April 1981 & JP-A-56003621**
**PATENT ABSTRACTS OF JAPAN vol. 6, no. 160 (E-126)(1038), 21 August 1982; & JP-A-57079603**
**PATENT ABSTRACTS OF JAPAN vol. 11, no. 331 (P-630)(2778), 29 October 1987; & JP-A-62113037**
**PATENT ABSTRACTS OF JAPAN, vol. 11, no. 308 (P-624)(2755), 8 October 1987; & JP-A-62100630**

(73) Proprietor : **NISSAN MOTOR COMPANY LIMITED**
**No. 2, Takara-cho,**
**Kanagawa-ku**
**Yokohama-city, Kanagawa-prefecture (JP)**
Proprietor : **Daido Tokushuko Kabushiki Kaisha**
**No. 66, Aza-Kuridashi**
**Hoshizaki-cho**
**Minami-ku**
**Nagoya-city Aichi-prefecture (JP)**

(72) Inventor : **Aoki, Hiroyuki**
**No 1533-190,Kamariya-cho,**
**Kanazawa-ku**
**Yokohama-city, Kanagawa-prefecture (JP)**
Inventor : **Yahagi, Shinichiro**
**No. 46-1, Yado,**
**Ohbu-cho**
**Ohbu-city, Aichi prefecture (JP)**
Inventor : **Saito, Takanobu**
**No 216,Itaya-cho**
**Okazaki-city, Aichi-prefecture (JP)**

(74) Representative : **Palmer, Roger et al**
**PAGE, WHITE & FARRER**
**54 Doughty Street**
**London WC1N 2LS (GB)**

EP 0 464 964 B1

## Description

This invention relates to torque detecting devices of magnetostriction type used for detecting the torque and, more particularly to improved torque detecting devices planned to increase the output of power, decrease the rotative fluctuation of output, and decrease the hysteresis.

This application is divided from European Patent Application 0261980 which relates to a torque detecting device employing a measuring shaft formed of a steel.

It is known that the strain of shaft material becomes large at surface of the shaft rather than center of it when the torque is applied on a measuring shaft such as rotatable shaft, fixed shaft and the like.

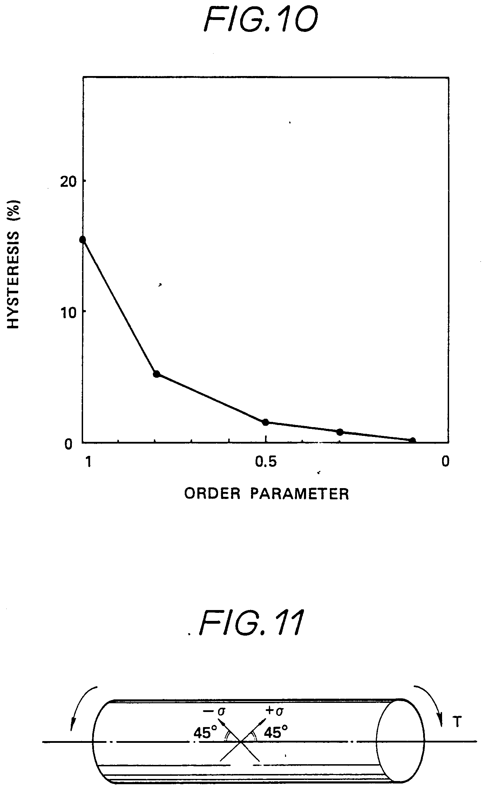

For example, if torque T is applied clockwise on the measuring shaft against the cross section thereof, the tensile stress $+ \sigma$ in the direction slanted on right side at the angle of 45° to the shaft direction and the compressive stress $- \sigma$ in the direction slanted on left side of the angle of 45° is generated around the shaft as shown in the Fig.11.

On the one hand, a magnetic substance have a characteristics that permeability is varied in response to the applied stress on it what is called magnetostriction characteristics, so that the applied stress on magnetic substance is able to be measured in magnetically using the characteristics of magnetic substances.

There are properties that the permeability increases to the direction of tensile stress in the magnetic substance having the positive magnetostriction, conversely the permeability decreases to the direction of tensile stress in the magnetic substance having the negative magnetostriction.

In the case of detecting the torque applied on the shaft such as rotatable shaft, fixed shaft and the like using this properties, it is possible to obtain the large detecting output by concentrating the magnetic flux generated from the excitation coil to the surface of the shaft i.e. part in which large strain is produced.

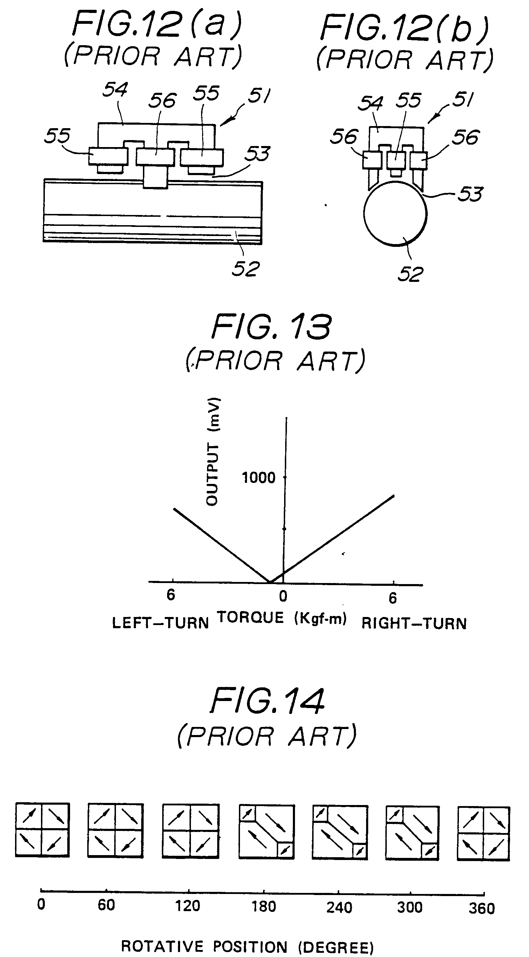

Fig.12 (a),(b) is a illustrate showing a conventional torque detecting device. This torque detecting device 51 has a structure that a yoke 54 made from a material with high permeability such a permalloy disposed in vicinity around a measuring shaft 52 consisting of magnetic substance having a magnetostriction effect in leaving a gap 53 from said measuring shaft 52, the yoke 54 is provided with two excitation coils 55 as excitating means forming magnetic circuit incorporating said measuring shaft 52 into a part of magnetic path and two detection coils 56 as detecting means detecting component of magnetostriction passing through said measuring shaft 52, and the magnetic flux generated from the excitation coils 55 forms magnetic circuit which the measuring shaft 52 and the yoke 54 are magnetic path.

On the torque detecting device 51, as shown in the Fig.11 for example, when the torque T is applied clockwise on the measuring shaft 52 against the cross section of it, the sum of the increasing of the permeability caused by tensile stress $+ \sigma$ in the direction slanted on right side at the angle of 45° to the shaft direction and the decreasing of the permeability caused by compressive stress $- \sigma$ in the direction slanted on left side at the angle of 45° is grasped as output.

More detailed explanation are given as follows, on the occasion of operating the torque detecting device 51 of magnetostriction type having aforementioned structure, the magnetic circuit passing through the measuring shaft 52, the gap 53, the yoke 54, the gap 53 and the measuring shaft 52 is formed by charging the excitation coils 55 with electricity. At this time, the induced electromotive force is produced in the coils 56.

In such a state, if the torque T is applied on the measuring shaft 52, the magnetic flux density passing through said magnetic circuit varies as a result of variation of own permeability of the measuring shaft 52 owing to the magnetostriction effect of the measuring shaft 52 as described above, corresponding to this variation the induced electromotive force producing in the detection coils 56 varies, and so it is possible to detect the torque applied on said measuring shaft 52 by reading of the said variation of induced electromotive force.

Like this, in the case of torque detecting device 51 the output characteristic shown in the Fig.13 for example is obtained, and using this characteristic detecting of the torque is carried out by means of corresponding applied torque with detecting output. (Japanese Patent Application No.60-79238)

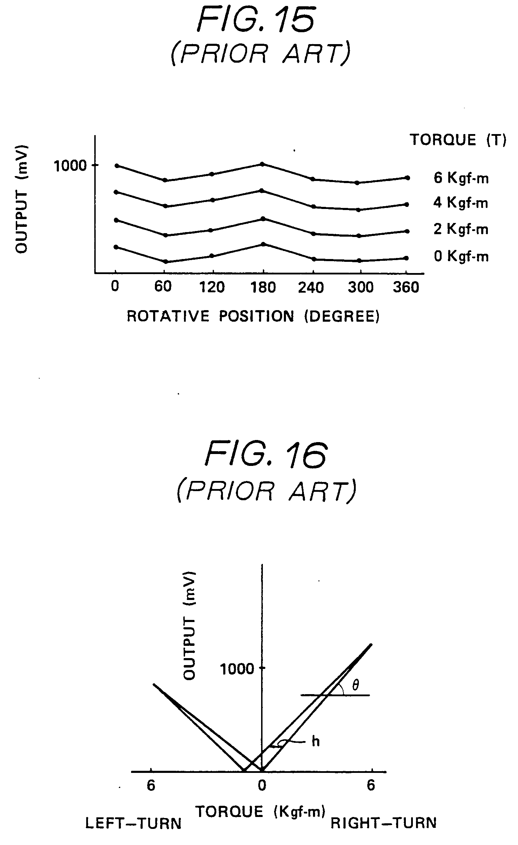

However, when the torque applied on the power transmission shaft used in widely (such as a drive shaft, column shaft and the like) is intended to detect, if the power transmission shaft is adopted in itself as a measuring shaft 52 using the torque detecting device of magnetostriction type having the structure shown in the Fig.12, the said power transmission shaft is generally made from the ordinary structural steel (JIS SC, SCr, SCM SNCM and the like), so that the magnetostriction effect is small and the angle θ in the output of the characteristic diagram shown in the Fig.16 is also small, accordingly it is impossible to obtain the sufficient sensitivity to detect. Further the problem existed in that it is difficult to detect the torque with accuracy because that the width h in said output of the characteristic diagram shown in the Fig.16 becomes large and the hysteresis becomes easy to produce.

Besides the shaft such as a rotatable shaft and a fixed shaft provided for measuring the torque, on which a local stress in consequence of machining or heat treatment such as hardening is generally applied, becomes

2

in the state that magnetic wall shifts and sticks owing to the local stress. Therefore, the permeability is distributed in the state having local anisotropy as shown in the Fig.14, if the torque is measured in such state, the output at the state that torque T=0 kgf-m shown in the Fig.15 (hereinafter, named as "zero-torque") appears as a fluctuation according to the rotative position of the measuring shaft 52. And since the state distributed the permeability in local anisotropy is not vanished but kept in the range of torque to be measured, the relation between the torque T and output shown in the Fig.15 appears as fluctuation of output according to the rotative position of the measuring shaft 52 even if the torque T increases, the problem existed that it is impossible to measure the torque T acted on the measuring shaft 52 with accuracy.

Then, heretofore the measuring shaft 52 is usually heated to high temperature and subjected to annealing for stress relieving in order to dissolve the state distributed the permeability in local anisotropy as mentioned above in the measuring shaft 52.

However, if the annealing at high temperature is performed on the measuring shaft 52, the material is softened and becomes easy to cause the plastic deformation, and the problem existed that detecting accuracy of the torque is lowered in consequence of appearance of hysteresis in large as shown in the Fig.16.

Thus, on the conventional torque detecting device 51, if the fluctuation of output owing to the rotation of the measuring shaft 52 is intended to dissolve, the hysteresis increases and adversely if the hysteresis is intended to keep in small, the fluctuation of output owing to the rotation increases. Such an antinomical and difficult problem existed in it.

Furthermore, from US-A-4 033 791 a magnetostrictive alloy is known with besides Fe, 5 to 15% Al, 0.5 to 10% Co, 3% other additives.

This invention is made in view of the above mentioned problems of the prior art, in particular on the occasion of the detecting of the torque applied on the rotating shaft by using the itself of heavy loaded rotative shaft such as power transmission shaft as a measuring shaft, it is an object of the invention to provide a torque detecting device which has a high detection sensitivity, small hysteresis and is possible to be used for detection of the torque with accuracy, on the condition that the strength of rotative shaft such as power transmission shaft used as a measuring shaft of the torque detecting device is maintained sufficiently.

Further, another object is to provide a torque detecting device with high accuracy wnich the detecting output of torque never fluctuate owing to rotative position of the measuring shaft even if the measuring shaft is used in state of rotating, moreover the hysteresis is able to decrease remarkably by means of detection of the total variation of permeability over the whole circumference of the measuring shaft without picking up the local anisotropy of permeability in the measuring shaft.

According to a first aspect of the present invention there is provided a torque detecting device having a measuring shaft, means for forming a magnetic circuit incorporating said measuring shaft into a part of the magnetic path of the circuit, and means for detecting a component of magnetostriction passing through said measuring shaft, characterised in that at least the part of said measuring shaft which is in said magnetic path is made from an iron-aluminium alloy consisting essentially of, by weight percentage from 11.0 to 15.0% of Al, and optionally from 0.01 to 5.0% in total of at least one of B, Si, Ge, Sn, Pb, P, Sb, Cu, Ni, Cr, W, V, Nb, Ta, Ti, Zr, Hf, Be, Sc, Y and a rare earth metal, the remainder being iron and impurities.

In a further aspect the invention provides a torque detecting device having a measuring shaft, means for forming a magnetic circuit incorporating said measuring shaft into a part of the magnetic path of the circuit, and means for detecting a component of magnetostriction passing through said measuring shaft, characterised in that at least the part of said measuring shaft which is in said magnetic path is made from an iron-aluminium alloy consisting essentially of, by weight percentage from 11.0 to 15.0% of Al, from 0.01 to 0.50% of C, from 0.01 to 5.0% in total of at least one of Cr, Mo, W, V, Nb, Ta, Ti, Zr, and Hf and optionally from 0.01 to 5.0% in total of at least one of B, Si, Ge, Sn, Pb, P, Sb, Cu, Ni, Cr, W, V, Nb, Ta, Ti, Zr, Hf, Be, Sc, Y and a rare earth metal, where the overall total of all the elements, excluding Al and C is not more than 5.0%, the remainder being iron and impurities.

In a preferred embodiment, where the iron-aluminium alloy consists essentially of from 11.0 to 15.0% of Al without said optional components, the alloy is composed of the disordered phase, or composed of the mixed phase comprising at least two phases selected from $Fe_3Al$ type ordered phase, FeAl type ordered phase and disordered phase, wherein the order parameter of $Fe_3Al$ type ordered phase is not more than 0.9.

Fig. 1 (a) is a longitudinal view and Fig. 1(b) is a cross-sectional veiw illustrating a structure of the torque detecting device of the example 1 of this invention.

Fig.2 is a graph showing the output characteristics of the torque detecting device;

Fig.3 is a graph showing experimental results measured each of output sensitivity and hysteresis of the example No.5 and No.7 in the case of carburizing and not carburizing on them;

Fig.4 is a cross-sectional view illustrating a structure of the torque detecting device of the example 2 of this invention;

Fig.5 is a diagram exemplifying a construction of electric circuit for connecting to the torque detecting device of Fig.4;

Fig.6 is a model diagram exemplifying cross-sectional form of concaved part and convexed part formed on the measuring shaft;

Fig.7 and Fig.8 are characteristic diagrams illustrating the relationship of torque and output when the measuring shaft is fixed at a certain position and stability of detecting output when the measuring shaft is rotated in one turn on the torque detecting device of the example 2 of this invention respectively;

Fig.9 is a graph exemplifying the results reseached influence of aluminun concentration in said iron-aluminum alloy on output sensitivity and hysteresis of the torque detecting device using a measuring shaft made from iron-aluminum alloy composed of the disordered phase or mixed phase comprising at least two phases of $Fe_3Al$ type ordered phase, FeAl type ordered phase and disordered phase;

Fig.10 is a graph exemplifying the results reseached influence of order parameter of said $Fe_3Al$ type ordered phase on the hysteresis;

Fig.11 is a perspective diagram showing the relation of torque (T) applied on shaft and stress($\sigma$);

Fig.12 (a) and Fig.12(b) are schematic front view and schematic side view illustrating the structure of conventional torque detecting device;

Fig.13 is a characteristic diagram illustrating the relationship of torque and output when the measuring shaft is fixed at a certain position on the torque detecting device;

Fig.14 is a conceptional diagram illustrating the state contributed permeability in local anisotropy at the surface of shaft on the ordinal shaft;

Fig. 15 is a characteristic diagram illustrating the fluctuation of detecting output when the measuring shaft is rotated in one turn on the conventional torque detecting device;

and Fig.16 is a characteristic diagram illustrating the relationship of torque and output using the measuring shaft which is heated to high temperature and subjected to a stress relief annealing in order to decrease the rotative fluctuation of output on the conventional torque detecting device.

A torque detecting device not strictly in accordance with the present invention as regards composition of a measuring shaft has a measuring shaft and coil for forming a magnetic circuit incorporating said measuring shaft into a part of magnetic path, and on the torque detecting device for detecting the torque by means of detection of a component of magnetostriction passing through the said measuring shaft, at least the part of said measuring shaft for forming the said magnetic path or the whole body thereof is made from the steel comprising, by weight percentage of, 0.1~1.5% of C, not more than 2.0% of Si, not more than 2.0% of Mn, and one or both of not more than 5.0% of Ni and not more than 5.0% of Cr, and if necessary, at least one of not more than 1.0% of Cu, not more than 1.0% of Mo,not more than 0.05% of B,not more than 0.5% of W, not more than 0.5% of V, not more than 0.5% of Ti, not more than 0.5% of Nb,not more than 0.5% of Ta, not more than 0.5% of Zr,not more than 0.5% of Hf,not more than 0.1% of Al and not more than 0.1% of N ,and remainder being iron and impurities.

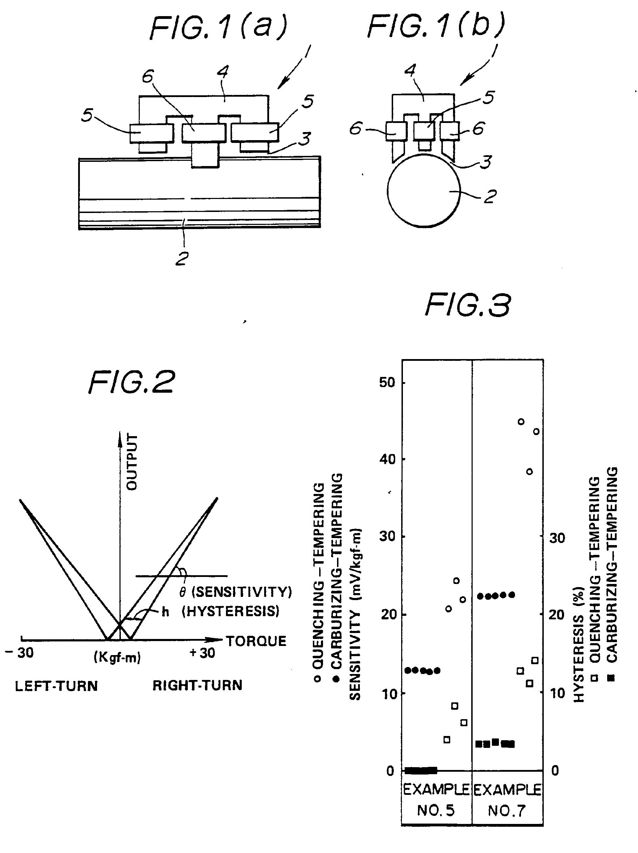

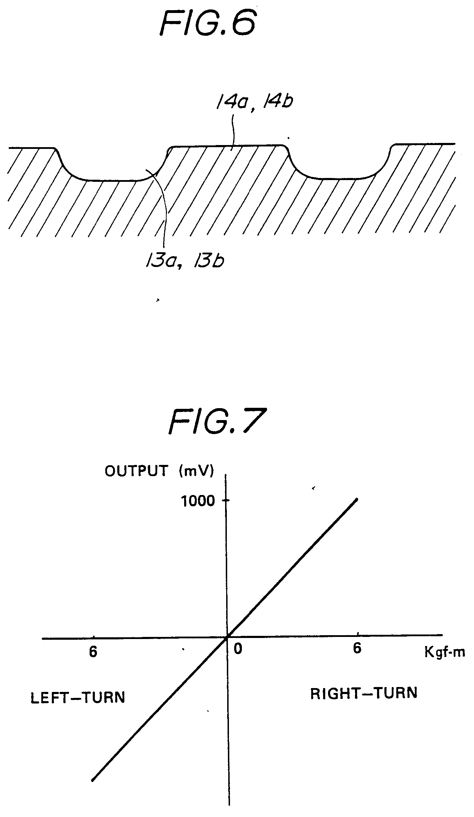

As a concrete structure of the torque detecting device of an embodiment of the invention it may be structured that a yoke 4 made from a material with high permeability is disposed around a measuring shaft 2 in leaving a gap 3 from said measuring shaft 2, and this yoke 4 is constructed a excitation coil (i.e. means of excitation) 5 and a detection coil (i.e. means of detection) 6 thereon, as a torque detecting device 1 exemplifying in the Fig.1.

And also, it may be structured that two coils are disposed around a measuring shaft, for forming the magnetic circuit incorporating said measuring shaft into a part of magnetic path by connecting the AC power source (i.e. means of excitation) to said two coils, and variation of permeability of said measuring shaft owing to the application of torque is detected as a variation of inductance of said coils by AC bridge (i.e. means of detection) , but it is not restricted within such structures.

The above mentioned steel comprising the specified composition may be used in a part or the whole body thereof. The reason why the chemical composition (weight %) thereof is limited is explained as follows.

C : 0.1~1.5%

C is a necessary element to maintain the strength required as structural materials of shaft for power transmission shaft and the like such as a drive shaft, column shaft etc.. For this purpose, not less than 0.1% of C is contained. However, if the amount is too large, the toughness is degraded and plastic workability in cold is adversely affected on contrary so that the amount of C is not more than 0.5%, and in case of including of W, V, Ti, Nb, Ta, Zr, Hf is not more than 1.5%.

Si : not more than 2.0%

Si acts as a deoxidizer at steel making and is an effective element for increasing the strength. However, if the amount is too large, the toughness is degraded so that it is not more than 2.0%.

Mn : not more than 2.0%

Mn acts as a deoxidizer and a desulfurizing agent at steel making and is an effective element for increasing the strength in consequence of improvement of hardenability of steel. However, if the amount is too large, the workability is degraded so that the amount of Mn is not more than 2.0%.

Ni : not more than 5.0%

Cr : not more than 5.0%

Ni and Cr are effective elements for increasing the strength in consequence of improvement of the hardenability of steel and reinforcement of the matrix.

In this case, although the sensitivity is improved (i.e. the angle $\theta$ in the Fig.2 is enlarged) by increasing the amount of Ni, the hysteresis is increased (i.e. the width h in the Fig.2 is enlarged), so that it is necessary to be not more than 5.0% of Ni. And, although the hysteresis shows a tendency to decrease (i.e. the width h in the Fig.2 becomes smaller) by increasing the amount of Cr to a certain degree, the sensitivity is degraded (i,e. the angle $\theta$ in the Fig.2 becomes smaller), and if the amount of Cr is too large, the hysteresis have a tendency to increase over again, so that it is necessary to be not more than 5.0% of Cr.

Like this, nevertheless Ni and Cr have a common effect improving the strength of measuring shaft, have a different effect on the magnetic property of the measuring shaft, it is desirable that the amount of Ni+Cr is limited to a range of 1.5~4.0% in order to improve the sensitivity of the torque detecting device of magnetostriction type and decrease the hysteresis in addition. Especially, it is preferable that the amount of Ni+Cr is limited to a range of 2.0~3.0% in order to decrease the hysteresis.

Cu : not more than 1.0%

Mo : not more than 1.0%

Both Cu and Mo may be added according to demand because that these are effective elements for improving the strength by reinforcing the matrix. However, if the amount of Cu is too large, the hot workability is degraded and if the amount of Mo is too large, the toughness is degraded, so that if they are added, it is suitable that the amount of Cu is not more than 1.0%, and the amount of Mo is not more than 1.0% too.

Besides,not more than 0.05% of B may be added in order to improve the hardenability of steel,and at least one of not more than 0.5% of W,not more than 0.5% of V,not more than 0.5% of Ti,not more than 0.5% of Nb,not more than 0.5% of Ta,not more than 0.5% of Zr,not more than 0.5% of Hf,not more than 0.1% of Al and not more than 0.1% of N may be added in order to improve the strength by grain refining and precipitation hardening.

For the measuring shaft using for the torque detecting device according the preferred aspect of this invention, the steel having above described composition is used as a material for a part or whole body thereof, if necessary, it is desirable to perform not only the ordinary quenching-tempering but also the carburizing, carburizing-tempering, carbonitriding, nitriding and the like for example, and it is desirable to keep the amount of C in the carburized layer in a range above 0.1% to 1.5% according to demand, in order to decrease the hysteresis furthermore, the amount of scatter on the output sensitivity and hysteresis of the individual measuring shaft and in order to increase the abrasion resistance and fatigue strength of the surface according to demand.

Further, at least one of not more than 1.0% of Pb, not more than 0.5% of Ca, not more than 0.5% of Se, not more than 0.5% of Te, not more than 0.5% of Bi and not more than 0.5% of S may be added in order to improve machinability of the measuring shaft.

An embodiment of a torque detecting device in accordance with an aspect of this invention as described above, has a measuring shaft and a coil for forming magnetic circuit incorporating said measuring shaft into a part of magnetic path, and on the torque detecting device for detecting the component of magnetostriction passing through the said measuring shaft, at least the part of said measuring shaft for forming the said magnetic path or the whole body thereof is made from the Fe-Al alloy which is composed of the disordered phase, or mixed phase comprising at least two phases of $Fe_3Al$ type ordered phase, FeAl type ordered phase and disordered phase, and the order parameter of $Fe_3Al$ type ordered phase is not more than 0.9. The measuring shaft may be given shape-magnetic anisotropy by forming the concavity and/or convexity leaving a suitable space on the surface of it, making a certain angle with shaft direction of said measuring shaft. Concretely, for example shape-magnetic anisotropy owing to irregular section is able to be formed as a pair of irregular sections inverting the direction of it, furthermore it may be the structure wrapping with a pair of coils facing a said pair of irregular sections. And in the case of wrapping with a pair of coils, it may be structure connecting the said coils with excitative oscillator and adjusting the exitative direction to the same direction. Furthermore, it may be structure detecting a variation of permeability according to the applied torque at a said pair of irregular section as a inductance variation of facing coils through the differential amplifier by AC bridge.

With a shaft made from iron-aluminium alloy composed of disordered phase in a part or whole of the shaft, or the shaft made from iron-aluminum alloy composed of mixed phase comprising at least two phases of $Fe_3Al$ type ordered phase of which order parameter is not more than 0.9, FeAl type ordered phase and disordered phase in a part or whole of the material is used for the measuring shaft, it is preferable to use the alloy comprising aluminum in a range from 8 to 18%, more particulary 11 to 15%.

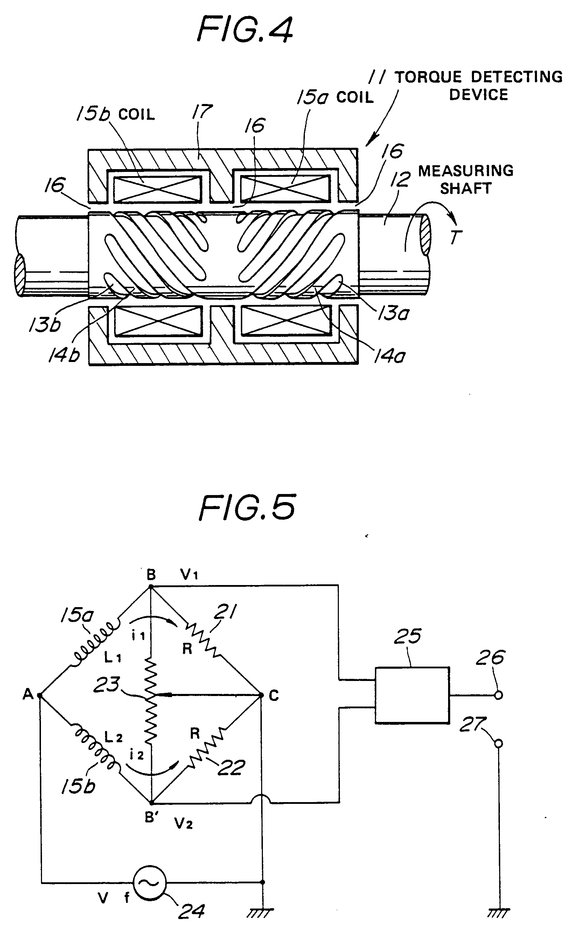

The inventor has investigated the relationship between aluminum concentration in the iron-aluminum alloy, output sensitivity and hysteresis in the various experimental study, consequently the result showing in the Fig.9 is obtained. The Fig.9 shows experimental result when the measuring shaft shaped as shown in the Fig.4 described later is made by hot working→cooling down. As shown in the Fig.9, concerning the sensitivity it becomes zero if aluminum concentration exceeds 18 weight%, concerning the hysteresis it decreases as the aluminum concentration increases and becomes zero in the neighbourhood of 14 weight %.

Accordingly, although there is some different according to the accuracy required for the torque detecting divice, on an ordinary occasion, it is desirable to satisfy the accuracy within 10% of hysteresis, and suitable that aluminum concentration is not less than 8 weight %. And if the aluminum concentration exceeds 18 weight %, the magnetism vanishes and the sensitivity becomes zero at room temperature,so that it is suitable to be not more than 18 weight%,more particulary to be 11 to 15%.

Further, the result showing in the Fig.10 is obtained in consequence of the investigation for the relation of order parameter of $Fe_3Al$ type ordered phase and hysteresis. As shown in the Fig.10, if the order parameter of $Fe_3Al$ type ordered phase exceeds 0.9 and approaches to the perfect ordered phase, the hysteresis increases and exceeds 10%, so that the order parameter of $Fe_3Al$ type ordered phase is limited to not more than 0.9.

The order parameter of $Fe_3Al$ type ordered phase is able to be controlled by selecting of cooling method for the materials affer the end of casting,hot forging,hot rolling,hot extrusion and the like, quenching method after the heating to the disordered region, or the temperature or holding time at the reheating to under of the $Fe_3Al$ type ordered / disordered phase transformation point after the said quenching.

Thus, using the iron-aluminum alloy composed of disordered phase or iron-aluminum alloy composed of mixed phase comprising at least two phase of $Fe_3Al$ type ordered phase of which order parameter is not more than 0.9, FeAl type ordered phase and disordered phase as a material of the measuring shaft, the torque detecting device having excellent output characteristics for the both of antinomical properties that the sensitivity is high moreover the hysteresis is remarkably small is able to be obtained.

It has been certified that it is more desirable that the electric resistivity of iron-aluminum alloy used for at least a part of the measuring shaft is not less than 75 $\mu\Omega$-cm according to another experiment by the inventor. It is caused that the higher the cooling rate after the manufacturing of measuring shaft by means of casting or hot forging, the larger the electric resistivity of manufactured measuring shaft, and the more the amount of disordered phase, the lower the hysteresis. Where the alloy has in total of at least one of B, Si, Ge, Sn, Pb, P, Sb, Cu, Ni, W, V, Nb, Ta, Ti, Zr, Hf, Be, Sc, Y and Rare Earth Element at 0.01~5.0% these elements acts as deoxidizer and/or desulfurizer in melting, strengthen by the improvement of the quenching property or precipitation, accelerate the fine of the grain size, control the diffusion of C, W, Cr, improve forgeability.

But, larger amount of these element deteriorate workability, toughness, hysteresis and the like, therefore upper limit of the total of these elements is determined to 5.0%. Where the alloy has C:0.01~0.50% and in total of at least one of Cr, Mo, W, V, Nb, Ta, Ti, Zr and Hf : 0:01-5.0%, then here C and Cr, Mo, W, V, Nb, Ta, Ti, Zr, Hf are the elements forming carbide in the matrix in order to improve the strength of the measuring shaft, for example, driving shaft, column shaft etc. However, large amount of these elements deteriorate the workability of the shaft, so that C is limited to 0.01~0.50% at least one of Cr, Mo, W, V, Nb, Ta, Ti, Zr and Hf is limited to 0.01~5.0% in total.

In the measuring shaft of the torque detecting device, the shaft may be added the heat-treatment which is cooled at the cooling rate of more than 500°C/hr from temperature of more than 500°C in order to improve the sensitivity of output and hysteresis.

The torque detecting device has a measuring shaft and the coil for forming a magnetic circuit incorporating said measuring shaft into a part of magnetic path and, on the torque detecting device for detecting the component of magnetostriction passing through the said measuring shaft, at least a part of said measuring shaft for forming the said magnetic path is made from the iron base alloy having the specific composition or structure, so that it is remarkably effective for increasing the output, decreasing the rotative fluctuation of output, and decreasing the hysteresis on the torque detecting device of magnetostriction type used for detecting the torque.

EXAMPLE 1

Each of steels having a chemical composition as shown in the Table 1 (which are not in accordance with the invention owing to the fact that they are not Fe-Al alloys) was casted after the melting, and the rods of 17mm in diameter were made by blooming and finish rolling.

Next, each of rods was subjected to a carburizing at condition of 900°C for 2 hours and quenched into oil, then tempered at 170°C. In this case, the amount of C in the carburized layer is shown together in the Table 1.

Secondly, using the each of heat treated rods for measuring shaft 2 of the torque detecting device 1 having a structure shown in the Fig.1, and by means of supplying the AC of which frequency is 40 kH$_3$ and current is 100mA to the excitation coil 5, magnetic circuit passing through the measuring shaft 2, gap3, yoke4, gap3, measuring shaft2, is formed, in this state, the output sensitivity (the angle in the Fig.2) and hysteresis (the width h in the Fig.2) of each torque detecting device 1 was examined by measuring the output voltage of each torque detecting device 1 with the detection coil 6 when the torque of 30 Kgf.m is applied to the left and right-handed rotation respectively. These results are shown in the Table 1 similarly.

Table 1

| No. | | Chemical composition (weight%) | | | | | | | | Amount of C in the carburized layer (weight%) | Sensitivity (mV/Kgf.m) | Hysteresis (%) |
|---|---|---|---|---|---|---|---|---|---|---|---|---|
| | | C | Si | Mn | Ni | Cr | Cu | Mo | Others | | | |
| Example | 1 | 0.30 | 0.45 | 0.45 | 2.00 | - | - | - | - | 0.60 | 21 | 3 |
| | 2 | 0.15 | 0.40 | 0.80 | - | 2.50 | - | - | Aℓ :0.03 N: 0.01 | 0.79 | 12 | 1 |
| | 3 | 0.25 | 0.70 | 0.80 | - | 4.00 | 0.75 | - | Ta:0.15 | 0.82 | 15 | 2 |
| | 4 | 0.20 | 0.25 | 0.75 | 0.10 | 1.00 | 0.10 | 0.16 | - | 0.74 | 12 | 9 |
| | 5 | 0.20 | 0.25 | 0.75 | 0.10 | 2.00 | 0.10 | 0.16 | Ti:0.03 Zr:0.05 | 0.78 | 13 | 0 |
| | 6 | 0.20 | 0.25 | 0.75 | 1.50 | 1.00 | 0.10 | 0.16 | - | 0.72 | 20 | 2 |
| | 7 | 0.20 | 0.25 | 0.75 | 2.00 | 0.50 | 0.10 | 0.16 | Pt: 0.15 | 0.60 | 22 | 3 |
| | 8 | 0.35 | 0.15 | 0.90 | 2.50 | 0.30 | - | - | Nb:0.20 V :0.20 B :0.005 | 0.63 | 22 | 3 |
| | 9 | 0.20 | 0.25 | 0.75 | 1.00 | 2.00 | 0.10 | 0.16 | - | 0.76 | 20 | 3 |
| | 10 | 0.20 | 0.25 | 0.75 | 2.50 | 1.00 | 0.10 | 0.16 | Ca:0.02 S:0.02 | 0.75 | 24 | 3 |
| | 11 | 0.18 | 0.35 | 0.70 | 3.00 | 2.50 | - | - | - | 0.76 | 27 | 8 |
| | 12 | 0.33 | 0.60 | 0.75 | 4.50 | 4.00 | 0.60 | - | - | 0.80 | 31 | 7 |
| Comparative Example | 13 | 0.19 | 0.35 | 1.05 | 6.00 | - | 0.70 | - | - | 0.55 | 40 | 15 |
| | 14 | 0.27 | 0.30 | 0.60 | - | 6.00 | 0.30 | - | - | 0.75 | 10 | 18 |

EP 0 464 964 B1

As apparent from the results showing in the Table 1, in the case of example No. 1~3 and No. 5~10 in which the amount of Ni is not more than 5.0% further the amount of Cr is not more than 5.0% and the total amount of them is in a range of 1.5~4.0%, the value of sensitivity is in a range of 12~24 mV/Kgf.m, the percentage of hysteresis is in a range of 0~3%, consequently both sensitivity and hysteresis show satisfactory results.

And in the case of example No. 4 in which the amount of Ni is not more than 5.0%, further the amount of Cr is not more than 5.0% and the total amount of them is less than 1.5%, it is obvious that its sensitivity is lower and its hysteresis is larger than that of case using measuring shaft in which the total amount of Ni and Cr is not less than 1.5%. Contrary to this, in the case of example No.11 and 12 according to the invention in which the total amount of Ni and Cr is not less than 4.0%, though the sensitivity of them is good, the hysteresis of them is comparatively large.

Further, in the case of comparative example No.13 comprising no Cr and not less than 5.0% of Ni, although its sensitivity is good, its hysteresis is too large. In the case of comparative example No.14 comprising no Ni and not less than 5.0% of Cr, it is obvious that not only its hysteresis is too large but also its sensitivity is too low.

In the Fig.3, measuring results of sensitivity θ and hysteresis h according to the same experimental procedure as described above is shown, providing the matter subjected to the carburizing as shown in the Fig.1 and another one not subjected to the carburizing as shown in the Fig.1 respectively, using the two kinds of alloys example No. 5 and No. 7. As apparently from Fig.5, good results are obtained on both carburized material and non-carburized one, but it is seen that carburized one is preferable because of low hysteresis and small amount of scattering of characteristic.

As described above, on the example 1 the torque detecting device has a measuring shaft consisting of magnetic substance, and means of excitation for forming magnetic circuit incorporating said measuring shaft into a part of magnetic path, and means of detection for detecting a component of magnetostriction passing through said measuring shaft, the output sensitivity of the said torque detecting device is able to increase and the hysteresis can be decreased at the same time, and detection of torque can be performed with accuracy on the maintaining the strength of measuring shaft sufficiently because that said measuring shaft is made from the steel comprising by weight percentage of, 0.1~1.5% C, not more than 2.0% of Si, not more than 2.0% of Mn and one or both of not more than 5.0% of Ni and not more than 5.0% of Cr, and if necessary, at least one of not more than 1.0% of Cu, not more than 1.0% of Mo, not more than 0.05% of B, not more than 0.5% of W, not more than 0.5% of V, not more than 0.5% of Ti, not more than 0.5% Nb, not more than 0.5% of Ta, not more than 0.5% of Zr, not more than 0.5% of Hf, not more than 0.1% of Al and not more than 0.1% of N and the remainder being iron and impurities. And particulary in the case of the detection of the torque applied on the rotating shaft by using the itself of heavy loaded rotative shaft such as power transmission shaft as a measuring shaft, remarkable merit that the output sensitivity of the torque detecting device can be increased and the hysteresis can be decreased at the same time, and detection of torque can be performed with accuracy on the maintaining the strength of rotative shaft such as power transmission shaft is produced.

EXAMPLE 2

Fig.4 is a cross-sectional view illustrating a structure of the torque detecting device according to another embodiment of this invention. The torque detecting device 11 shown in the figure has a measuring shaft 12 made from iron-aluminium alloy at least superficially, concerning said iron-aluminium alloy, alloy composed of the disordered phase only, or mixed phase comprising at least two phases of $Fe_3Al$ type ordered phase being not more than 0.9 of order parameter, FeAl type ordered phase and disordered phase is used. And on the surface of said measured shaft 12, a concaved part 13a, 13b and convexed part 14a, 14b making a certain angle with shaft direction of said measuring shaft 12 is formed to be integral with said measuring shaft 12 in leaving a suitable space, the shape-magnetic anisotropy is given by these concaved part 13a, 13b and convexed part 14a, 14b.

In this case, said concaved part 13a, convexed part 14a on the one side and concaved part 13b, convexed part 14b on the other side are provided in a pair with inclining by same angle (45° in this embodiment) in the reverse direction each other with shaft direction.

And the torque detecting device 11 has a pair of coils 15a, 15b disposed in facing of concaved part 13a, convexed part 14a on the one side and concaved part 13b, convexed part 14b on the other side formed on the said measuring shaft 12 in addition to said measuring shaft 12, and the structure provided a cylindrical yoke 17 made from a material with high permeability at outside of coils 15a, 15b in leaving a gap 16 from the measuring shaft 12.

On the torque detecting device having a such structure, coils 15a, 15b compose the bridge circuit in combination with resistor 21,22 as exemplifying in the Fig.5, the bridge circuit is provided with a variable resistance 23 for balancing, and the excitative direction is adjusted to same direction connecting a excitative oscillator 24 to connecting points A,C in the bridge circuit, detection output can be picked up from output terminals 26, 27 connecting a differential amplifier 25 to connecting points B,B′.

The action in the case connecting the torque detecting device 11 shown in the said Fig.4 to the electric circuit shown in the Fig.5 will be described as follows.

First of all at operation, AC with constant amplitude (V) and frequency (f) is applied to the coils 15a, 15b from the oscillator for excitation 24. In consequence of this electric charging, the line of magnetic force for forming the magnetic path with circuit of measuring shaft 12→gap 16→yoke 17→gap 16→measuring shaft 12 is generated in surrounding the coils 15a, 15b.

The other hand, if the frequency (f) of applied AC is made to higher, the eddy current increases in the measuring shaft 12. And the eddy current is distributed in the state that the nearer position from the center of measuring shaft 12, the more powerful it, and becomes zero at the surface. Therefore, though the magnetization at the surface can follow the variation of external magnetic field, the variation of magnetization at the inside is prevented.

Accordingly, said line of magnetic force flows in the part of surface of measuring shaft 12, in particular flows in the convexed parts 14a, 14b mainly, because that the concaved parts 13a, 13b are formed on the measuring shaft 12 making a certain angle with shaft direction of the said measuring shaft 12, they become magnetic reluctance. Hence the effect of shape-magnetic anisotropy owing to said concaved parts 13a, 13b and convexed parts 14a, 14b is produced.

Concerning the angle of said concaved parts 13a, 13b and convexed parts 14a, 14b to the shaft direction, the angle made with concaved part 13a, convexed part 14a on the one side and the angle with concaved part 13b, convexed part 14b on the other side should be same in the opposite direction with each other, but it is the most desirable that the directions of them are in agreement with the direction of principal stress when the torque is applied on the measuring shaft 12, i.e. the direction of 45° to the right side and direction of 45° to the left side. The reason is that said line of magnetic force flows in the direction of principal stress mainly, and being the most surface part of the measured shaft 12 the convexed parts 14a, 14b are the largest strain existing place, the variation of permeability owing to the strain of magnetic substance can be picked up most effectively.

And if the torque applied on the measuring shaft 12 in the direction T shown in the Fig.4, because the convexed part 14a on the one side is formed in the direction of 45° to the right side, the maximum tensile stress + σ acts on it, on the contrary, because the convexed part 14b on the oter side is formed in the direction of 45° to the left side, the maximum compressive stress-σ acts on it.

Hereupon, if the measuring shaft 12 has a positive magnetostriction effect, the permeability of convexed part 14a on the one side increases in comparison with it in the occasion that torque is zero, contrary above the permeability of convexed part 14b on the other side decreases in comparison with it in the occasion that torque is zero.

Therefore, increasing the inductance of the coil 15a on the one side, and decreasing the inductance of the coil 15b on the other side, the balance of the bridge circuit shown in the Fig.5 breaks and the output corresponding to the torque T is generated between the output terminal 26 and 27.

And when the torque is applied in the adverse direction, according to the adverse action described above, decreasing the inductance of the coil 15a on the one side and increasing the inductance of the coil 15b on the other side, the balance of the bridge circuit shown in the Fig.5 breaks and the output corresponding to the torque T is generated between the output terminal 26 and 27.

On this example as described above, if the permeability of maesuring shaft 12 is varied according to the temperature the zero point of output can cease to shift and it is possible to heighten the detecting accuracy of the torque because that forming the concaved parts 13a, 13b and convexed parts 14a, 14b in a pair with reverse inclination, facing the coils 15a, 15b to them respectively, and difference of magnetism variation at said concaved parts 13a, 13b and convexed parts 14a, 14b is detected by means of bridge circuit.

Describing more concertely in regard to above, when the inductance of coils, 15a, 15b are described as $L_1, L_2$ respectively, resistance value of resistors 21, 22 are described as R, voltage and frequency of excitative oscillator 24 are described as V and f respectively, electric current $i_1$ flowing in the bridge circuit A-B-C and electric current $i_2$ flowing in the circuit A-B′-C are given by:-

$$i_1 = \frac{V}{\sqrt{R^2 + (2\pi f L_1)^2}}$$

$$i_2 = \frac{V}{\sqrt{R^2 + (2\pi f L_2)^2}}$$

and electric potential $V_1$ at point B is given by: $V_1 = i_1 \cdot R$ electric potential $V_2$ at point B′ is given by $V_2 = i_2 \cdot R$ there-

fore the potential difference between B-B' is given by:-

$$\left| V_1 - V_2 \right| \quad i.e.$$

$$\left| \frac{1}{\sqrt{R^2 + (2\pi f L_1)^2}} - \frac{1}{\sqrt{R^2 + (2\pi f L_2)^2}} \right| \cdot R \cdot V$$

this is gained by means of differential amplifier 25.

On the electric circuit shown in the Fig.5, it is more desirable that the frequency (f) of AC applied on coils 15a, 15b from the excitative oscillator 24 is in a range of as much as $1kH_3 \sim 100kH_3$, so that it is possible to obtain the high sensitivity and low hysteresis output characteristics.

On the torque detecting device according to the embodiment of this invention, using the shaft made from iron-aluminum alloy at least in the surface part, and using especially said alloy composed of disordered phase or composed of mixed phase comprising at least two phases $Fe_3Al$ type ordered phase of which order parameter is not more than 0.9, FeAl type ordered phase and disordered phase for the measuring shaft 12, are same as described above, on this example the concaved parts 13a, 13b and convexed parts 14a, 14b are formed in the surface of measuring shaft 12 of 20mm in diameter. In this case, a level difference of concaved parts 13a, 13b and convexed parts 14a, 14b on the measuring shaft 12 are formed into 1mm. The level-difference should be formed according to the degree of influence of said eddy current, may be sufficient in a range as much as 0.5mm~1.5mm if the frequency of AC applied from the excitative oscillator 24 is in a range as much as $1kH_3 \sim 100 kH_3$ as aforesaid.

On the one hand, the space of said concaved parts 13a, 13b and convexed parts 14a, 14b may be set up so that shape-magnetic anisotropy may be exhibited sufficiently, both concaved parts 13a, 13b and convexed parts 14a, 14b are formed with space of 2mm in this embodiment.

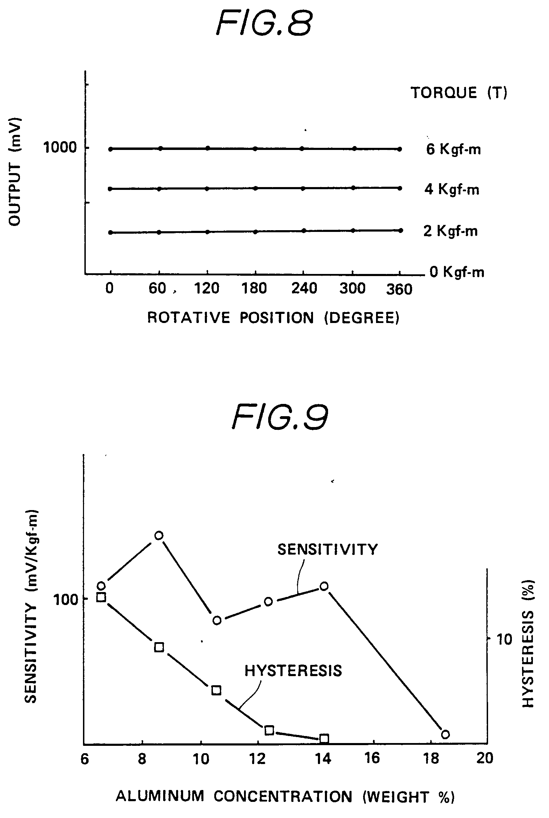

On the other side, concerning the cross- sectional shape of the concaved parts 13a, 13b and convexed parts 14a,14b, by forming them into rounded shape as shown a model diagram in the Fig.6, the influence of notch can be decreased and machinability can be improved.

In the Fig.6, it is shown that the concaved parts 13a, 13b are formed into rounded shape and convexed parts 14a, 14b are flat shape, but if necessary it is desirable to form the also convexed parts 14a, 14b into rounded shape, it may be suitable that fracture owing to the notch effect in the case of applying the torque can be prevented by forming them both into rounded shape like this.

On the torque detecting device shown in this example the number of turns of said coils 15a, 15b should be set properly, in this case both coils 15a, 15b made by winding 44 turns with copper wire of 0.6mm in diameter. Further concerning to the manner of connecting the copper wire in the coils 15a, 15b, by connecting the wire so that the direction of magnetic field by the coil 15a in one side and that by the coil 15b in the other side may conform to the same direction, the excited magnetic field is held in common, the output sensitivity can be heightened. And in this example, measurement of the torque is performed under the condition that AC applied from the excitative oscillator 24 in the electric circuit shown in the Fig.5 is $10 kH_3$ in excitative frequency and 100mA in electric current.

Consequently, the torque-output characteristics was shown in the Fig.7 when the measuring shaft 12 is fixed at a certain position using the torque detecting device according to this example. Hereupon, balancing and adjusting the output at zero torque into the zero with the variable resistance 23 in the electric circuit shown in the Fig.5, the zero point is never shifted hereafter. And in this case, an excellent characteristic that the hysteresis is zero was shown.

And the output was as shown in the Fig.8, when the measuring shaft 12 is rotated. As shown in the Fig.8 there is not the rotative fluctuation of zero point entirely on the torque detecting device 11 because that the averaged variation of permeability over the whole circumference of the measuring shaft 12 is grasped, therefore the repetitive fluctuation of output corresponding to applied torque was not produced entirely even if the torque is applied. More Fig.8 and Fig.10 is a diagram showing the experimental results when the measuring shaft is made from the iron-aluminum alloy comprising by weight 14% of Al, which contains $Fe_3Al$ type ordered phase and disordered phase and order parameter of $Fe_3Al$ type ordered phase is 0.3.

Table 2

| | No. | Chemical composition (weight%) Aℓ | others | | | | Heat treatment | Sensitivity (V/Kgf.m) | Hysteresis (%) |
|---|---|---|---|---|---|---|---|---|---|
| Example | 1 | 12.0 | – | – | – | – | 1100°C×3hours→oil cooling (in vacuum) | 2.3 | 7 |
| | 2 | 12.7 | – | – | – | – | 1100°C×3hours→700°C slow cooling →oil cooling (in vacuum) | 3.2 | 0 |
| | 3 | 13.5 | – | – | – | – | 1100°C×3hours→800°C slow cooling →N₂ cooling (in vacuum) | 1.9 | 2 |
| | 4 | 14.2 | – | – | – | – | 1100°C×3hours→580°C slow cooling →oil cooling (in vacuum) | 1.5 | 4 |
| | 5 | 12.7 | – | – | – | – | 1000°C×3hours→100°C/hr cooling (in H₂ gas) | 2.9 | 10 |
| | 6 | 12.4 | Cr: 1.1 | – | – | – | 1100°C×3hours→oil cooling (in vacuum) | 2.5 | 3 |
| | 7 | 12.8 | Mo: 0.8 | – | – | – | 1100°C×3hours→700°C slow cooling →oil cooling (in vacuum) | 2.7 | 2 |
| | 8 | 13.1 | Mn: 1.5 | – | – | – | 1100°C×3hours→800°C slow cooling →N₂ cooling (in vacuum) | 2.2 | 5 |
| | 9 | 13.3 | V: 0.5 | C: 0.05 | – | – | 1000°C×3hours→700°C slow cooling →oil cooling (in vacuum) | 2.1 | 3 |
| | 10 | 12.9 | Nb: 0.3 | Zr: 0.2 | C: 0.1 | – | 1100°C×3hours→800°C slow cooling →1000°C/hours cooling(in H₂ gas) | 1.8 | 4 |
| | 11 | 12.0 | Co: 1.3 | Nb: 0.5 | C: 0.1 | – | 1100°C×3hours→1000°C/hours cooling (in H₂ gas) | 1.8 | 4 |
| | 12 | 12.9 | Cr: 0.5 | Ni: 0.3 | Ti: 0.2 | C: 0.05 | 1100°C×3hours→580°C slow cooling →oil cooling (in vacuum) | 1.8 | 6 |
| Comparative Example | 13 | 9.5 | – | – | – | – | 1100°C×3hours→700°C slow cooling →oil cooling (in vacuum) | 1.0 | 14 |
| | 14 | 18.5 | – | – | – | – | 1000°C×2hours→1000°C/hr cooling (in H₂ gas) | 0.9 | 7 |
| | 15 | 13.1 | Co: 3.0 | Ni: 2.5 | V: 1.3 | – | 1000°C×3hours→ 100°C/hr cooling (in H₂ gas) | 0.7 | 18 |

Table 2 shows examples of the chemical compositions of the measuring shaft. Torque measuring test was performed by the use of the measuring shaft shown in the table 2 by the conditions of the above mentioned, that is, the diameter of the shaft is 20 mm, driving torque is±1 kgf-m.

The torque detecting device 11 according to the example of this invention is designed to improve the output

12

EP 0 464 964 B1

sensitivity by using the yoke 17 made from the material with high permeability such as iron-nickel alloy and so decreasing the leak of the line of magnetic force, but yoke 17 need not be used always in consideration of balance with exciting current.

Futhermore, the variation of permeability of a pair of concaved parts 13a,13b and convexed parts 14a,14b owing to the applied torque on said measuring shaft 12 is grasped as the variation of inductance of a pair of coils 15a,15b , and detected by AC bridge through the differential amplifier 25, but the measuring shaft 12 having said structure is applicable to the torque detecting device provided with excitation coil and detection coil.

As mentioned above, concerning the example 2 according to an embodiment of this invention, the torque detecting device having the measuring shaft and the coil for forming the magnetic circuit incorporating the said measuring shaft into a part of magnetic path, by detecting a component of magnetostriction passing through said measuring shaft, the hysteresis is very small and accurate torque detection is possible because that said measuring shaft is made from the iron-aluminum alloy which composed of the disordered phase or mixed phase. comprising at least two phases of $Fe_3Al$ type ordered phase, FeAl type ordered phase and disordered phase, and order parameter or $Fe_3Al$ type ordered phase is not more than 0.9, moreover the fluctuation of output owing to rotation of the measuring shaft does not exist entirely because that the variation of magnetism owing to applied torque on said measuring shaft is grasped over the whole circumference of the said measuring shaft, so that the remarkable merits that for example the torque of rotating shaft in high speed can be measured with accuracy is produced. And, when the shape-magnetic anisotropy is given by forming the concaved part and/or convexed part on the measuring shaft, the zero point of output can be made to fix even if the permeability of measuring shaft varies owing to temperature change by means of detecting the difference between both said concaved part and convexed part formed in a pair with reverse inclination, furthermore, the torque detecting device having an excellent effect that, for example, the means of torque detection can be composed in very compactly without using the coupling because that the power transmission shaft can be used directly for the measuring shaft of torque detecting device can be provided.

## Claims

1. A torque detecting device having a measuring shaft (2,12), means (5) for forming a magnetic circuit incorporating said measuring shaft (2,12) into a part of the magnetic path of the circuit, and means (6) for detecting a component of magnetostriction passing through said measuring shaft (2,12), characterised in that at least the part of said measuring shaft (2,12) which is in said magnetic path is made from an iron-aluminium alloy consisting essentially of, by weight percentage from 11.0 to 15.0% of Al, and optionally from 0.01 to 5.0% in total of at least one of B, Si, Ge, Sn, Pb, P, Sb, Cu, Ni, Cr, W, V, Nb, Ta, Ti, Zr, Hf, Be, Sc, Y and a rare earth metal, the remainder being iron and impurities.

2. A torque detecting device having a measuring shaft (2,12), means (5) for forming a magnetic circuit incorporating said measuring shaft (2,12) into a part of the magnetic path of the circuit, and means (6) for detecting a component of magnetostriction passing through said measuring shaft (2,12), characterised in that at least the part of said measuring shaft (2,12) which is in said magnetic path is made from an iron-aluminium alloy consisting essentially of, by weight percentage from 11.0 to 15.0% of Al, from 0.01 to 0.50% of C, from 0.01 to 5.0% in total of at least one of Cr, Mo, W, V, Nb, Ta, Ti, Zr, and Hf and optionally from 0.01 to 5.0% in total of at least one of B, Si, Ge, Sn, Pb, P, Sb, Cu, Ni, Cr, W, V, Nb, Ta, Ti, Zr, Hf, Be, Sc, Y and a rare earth metal, where the overall total of all the elements, excluding Al and C is not more than 5.0%, the remainder being iron and impurities.

3. A torque detecting device according to claim 1, excluding said optional components, characterised in that the iron-aluminium alloy is composed of the disordered phase, or composed of the mixed phase comprising at least two phases selected from $Fe_3Al$ type ordered phase, FeAl type ordered phase and disordered phase, wherein the order parameter of $Fe_3Al$ type ordered phase is not more than 0.9.

4. A torque detecting device according to any preceding claim, wherein to said measuring shaft (2,12) there is performed a heat-treatment including a step of cooling at a rate of more than 500° C/hr from a temperature of more than 500°C.

5. A torque detecting device according to any one of claims 1 to 4, wherein said measuring shaft (2,12) is formed with concave portions (13a,b) and convex portions (14a,b) extending at a predetermined angle

13

with respect to the axis thereof in the surface thereof.

6. A torque detecting device according to any one of claims 1 to 5, wherein said device has an excitation coil (5) as means for forming the magnetic circuit incorporating said measuring shaft into a part of magnetic path and a detection coil (6) as means for detecting the component of magnetostriction passing through said measuring shaft.

7. A torque detecting device according to claim 6, wherein said excitation coil (5) as means for forming the magnetic circuit incorporating said measuring shaft into a part of magnetic path and said detection coil (6) as means for detecting the component of magnetostriction passing through said measuring shaft are formed from a common coil.

**Patentansprüche**

1. Drehmomenterfassungvorrichtung mit einer Meßwelle (2,12), einer Einrichtung (5) zum Bilden eines Magnetkreises, der die Meßwelle (2,12) als Teil des Magnetweges des Kreises enthält, und einer Einrichtung (6) zum Erfassen einer Komponente der durch die Meßwelle (2,12) verlaufenden Magnetostriktion, dadurch gekennzeichnet, daß wenigstens derjenige Teil der Meßwelle (2,12), der sich im Magnetweg befindet, aus einer Eisen-Aluminiumlegierung hergestellt ist, die im wesentlichen besteht aus 11,0 bis 15,0 Gew.-% Al und wahlweise insgesamt 0,01 bis 5,0 Gew.-% wenigstens eines Elements aus der Gruppe B, Si, Ge, Sn, Pb, P, Sb, Cu, Ni, Cr, W, V, Nb, Ta, Ti, Zr, Hf, Be, Sc, Y und einem Seltenerdmetall, wobei der Rest aus Eisen und Verunreinigungen besteht.

2. Drehmomenterfassungsvorrichtung mit einer Meßwelle (2, 12), einer Einrichtung (5) zum Bilden eines Magnetkreises, welcher die Meßwelle (2,12) als Teil des Magnetweges des Kreises enthält, und einer Einrichtung (6) zum Erfassen einer Komponente der durch die Meßwelle (2,12) verlaufenden Magnetostriktion, dadurch gekennzeichnet, daß wenigstens derjenige Teil der Meßwelle (2,12), der in dem Magnetweg liegt, aus einer Eisen-Aluminiumlegierung hergestellt ist, die im wesentlichen besteht aus 11,0 bis 15,0 Gew.-% Al, 0,01 bis 0,50 Gew.-% C, insgesamt wenigstens 0,01 bis 5,0 Gew.-% eines Elements aus der Gruppe Cr, Mo, W, V, Nb, Ta, Ti, Zr und Hf und wahlweise insgesamt 0,01 bis 5,0 Gew.-% wenigstens eines Elements aus der Gruppe B, Si, Ge, Sn, Pb, P, Sb, Cu, Ni, Cr, W, V, Nb, Ta, Ti, Zr, Hf, Be, Sc, Y und einem Seltenerdmetall, wobei die Gesamtsumme aller dieser Elemente ausschließlich Al und C nicht mehr als 5,0 Gew.-% beträgt, und wobei der Rest aus Eisen und Verunreinigungen besteht.

3. Drehmomenterfassungsvorrichtung nach Anspruch 1, bei welcher die wahlweisen Komponenten ausgeschlossen sind, dadurch gekennzeichnet, daß die Eisen-Aluminiumlegierung aus der fehlgeordneten Phase oder der gemischten Phase besteht, welche wenigstens zwei Phasen enthält, die ausgewählt sind aus der geordneten Phase vom $Fe_3Al$-Typ, der geordneten Phase vom FeAl-Typ und der fehlgeordneten Phase, wobei der Ordnungsparameter der geordneten Phase vom $Fe_3Al$-Typ nicht mehr als 0,9 beträgt.

4. Drehmomenterfassungsvorrichtung nach einem der vorangehenden Ansprüche, bei welcher auf die Meßwelle (2,12) eine Wärmebehandlung einschließlich des Schritts der Abkühlung mit einer Geschwindigkeit von mehr als 500°C/h, ausgehend von einer Temperatur von mehr als 500°C, ausgeübt wird.

5. Drehmomenterfassungsvorrichtung nach einem der Ansprüche 1 bis 4, bei welcher die Meßwelle (2,12) mit konkaven Teilen (13a,b) und konvexen Teilen (14a,b) ausgeführt ist, welche sich über einen vorbestimmten Winkel bezüglich der Achse derselben in ihrer Oberfläche erstrecken.

6. Drehmomenterfassungsvorrichtung nach einem der Ansprüche 1 bis 5, bei welcher die Vorrichtung eine Erregerspule (5) als Einrichtung zum Bilden des Magnetkreises, welcher die Meßwelle als Teil des Magnetweges enthält, und eine Erfassungsspule (6) als Einrichtung zum Erfassen der Komponente der durch die Meßwelle verlaufenden Magnetostriktion aufweist.

7. Drehmomenterfassungseinrichtung nach Anspruch 6, bei welcher die Erregerspule (5) als Einrichtung zum Bilden des Magnetkreises, der die Meßwelle als Teils des Magnetweges enthält, und die Erfassungsspule (6) als Einrichtung zum Erfassen der Komponente der durch die Meßwelle verlaufenden Magnetostriktion aus einer gemeinsamen Spule gebildet sind.

**14**

**Revendications**

1. Dispositif de détection de couple comportant un arbre de mesure (2, 12), un moyen (5) pour former un circuit magnétique englobant ledit arbre de mesure (2, 12) dans une partie de la trajectoire magnétique du circuit, et un moyen (6) pour détecter une composante de magnétostriction traversant ledit arbre de mesure (2, 12), caractérisé en ce qu'au moins la partie dudit arbre de mesure (2, 12) qui se trouve dans ladite trajectoire magnétique est faite d'un alliage fer-aluminium consistant principalement, en pourcentage en poids, en 11 à 15 % d'Al, et en option en 0,01 à 5 % au total d'au moins un élément de B, Si, Ge, Sn, Pb, Sb, Cu, Ni, Cr, W, V, Nb, Ta, Ti, Zr, Hf, Be, Sc, Y et un métal de terres rares, le reste étant du fer et des impuretés.

2. Dispositif de détection de couple comportant un arbre de mesure (2, 12), un moyen (5) pour former un circuit magnétique englobant ledit arbre de mesure (2, 12) dans une partie de la trajectoire magnétique du circuit, et un moyen (6) pour détecter une composante de magnétostriction traversant ledit arbre de mesure (2, 12), caractérisé en ce qu'au moins la partie dudit arbre de mesure (2, 12) qui se trouve dans ladite trajectoire magnétique est faite d'un alliage fer-aluminium consistant principalement, en pourcentage en poids, en 11 à 15 % d'Al, en 0,01 à 0,5 % de C, en 0,01 à 5 % au total d'au moins un élément de Cr, Mo, W, V, Nb, Ta, Ti, Zr, et Hf et en option en 0,01 à 5 % au total d'au moins un élément de B, Si, Ge, Sn, Pb, Sb, Cu, Ni, Cr, W, V, Nb, Ta, Ti, Zr, Hf, Be, Sc, Y et un métal de terres rares, où la quantité totale de tous les éléments, excepté Al et C, n'excède pas 5 %, le reste étant du fer et des impuretés.

3. Dispositif de détection de couple selon la revendication 1, excluant lesdits éléments optionnels, caractérisé en ce que l'alliage fer-aluminium est composé de la phase désordonnée, ou composé de la phase mélangée comprenant au moins deux phases sélectionnées parmi la phase ordonnée de type $Fe_3Al$, la phase ordonnée de type FeAl et la phase désordonnée, où le paramètre d'ordre de la phase ordonnée de type $Fe_3Al$ est au plus de 0,9 %.

4. Dispositif de détection de couple selon l'une quelconque des revendications précédentes, dans lequel ledit arbre de mesure (2, 12) subit un traitement thermique comprenant une phase de refroidissement à une vitesse de plus de 500°C/h à partir d'une température supérieure à 500°C.

5. Dispositif de détection de couple selon l'une quelconque des revendications 1 à 4, dans lequel ledit arbre de mesure (2, 12) est doté de portions concaves (13a, b) et de portions convexes (14a, b) s'étendant à un angle prédéterminé par rapport à l'axe de l'arbre dans sa surface.

6. Dispositif de détection de couple selon l'une quelconque des revendications 1 à 5, dans lequel ledit dispositif comporte une bobine d'excitation (5) comme moyen pour former le circuit magnétique englobant ledit arbre de mesure dans une partie de la trajectoire magnétique et une bobine de détection (6) pour détecter la composante de magnétostriction traversant ledit arbre de mesure.

7. Dispositif de détection de couple selon la revendication 6, dans lequel ladite bobine d'excitation (5) comme moyen pour former le circuit magnétique englobant ledit arbre de mesure dans une partie de la trajectoire magnétique et ladite bobine de détection (6) pour détecter la composante de magnétostriction traversant ledit arbre de mesure sont formées à partir d'une bobine commune.

# FIG.1(a)

# FIG.1(b)

# FIG.2

# FIG.3

16

## FIG.6

14a, 14b

13a, 13b

## FIG.7

OUTPUT (mV)

1000

6        0        6        Kgf-m

LEFT—TURN                    RIGHT—TURN

# FIG.4

15b COIL 17 16 15a COIL // TORQUE DETECTING DEVICE

16 16 12 MEASURING SHAFT

T

13b 13a

14b 14a

# FIG.5

B V₁

15a 21

i₁ R

L₁

23

A C

L₂ R

i₂ 22

15b

B' V₂

25 26

27

V f ～ 24

## FIG.8

## FIG.9

# FIG.10

# FIG.11

# FIG.12(a)
## (PRIOR ART)

54  56  55  51
55                53

52

# FIG.12(b)
## (PRIOR ART)

54 55  51
56      56

53

52

# FIG.13
## (PRIOR ART)

OUTPUT (mV)

1000

6       0       6

LEFT-TURN   TORQUE (Kgf-m)   RIGHT-TURN

# FIG.14
## (PRIOR ART)

0     60     120     180     240     300     360

ROTATIVE POSITION (DEGREE)

# FIG.15
## (PRIOR ART)

# FIG.16
## (PRIOR ART)